(19) Europäisches Patentamt
European Patent Office
Office européen des brevets

(11) Veröffentlichungsnummer: **0 031 505**
**A1**

(12) # EUROPÄISCHE PATENTANMELDUNG

(21) Anmeldenummer: **80107663.9**

(22) Anmeldetag: **05.12.80**

(51) Int. Cl.³: **C 09 B 29/42**
// C08K5/23, C09B67/38, D06P1/02

(30) Priorität: **12.12.79 DE 2949913**

(43) Veröffentlichungstag der Anmeldung: **08.07.81**
**Patentblatt 81/27**

(84) Benannte Vertragsstaaten: **CH DE FR GB IT LI**

(71) Anmelder: **BASF Aktiengesellschaft,**
**Carl-Bosch-Strasse 38, D-6700 Ludwigshafen (DE)**

(72) Erfinder: **Dehnert, Johannes, Dr. Chem.,**
**Ottweilerstrasse 2, D-6700 Ludwigshafen (DE)**
Erfinder: **Kurtz, Walter, Dr. Chem.,**
**Sonnenwendstrasse 73, D-6702 Bad Duerkheim (DE)**
Erfinder: **Lamm, Gunther, Dr. Chem.,**
**Heinrich-Heine-Strasse 7, D-6733 Hassloch (DE)**

(54) **Monoazofarbstoffe der Aminopyridinreihe, ihre Herstellung und Verwendung zum Färben thermoplastischer Kunststoffe in der Masse sowie Farbstoffzusammensetzungen zum Färben von Fasern.**

(57) Die Erfindung betrifft Farbstoffe der allgemeinen Formel

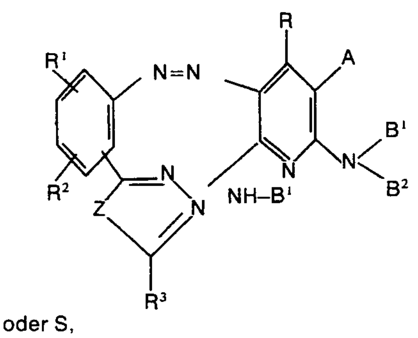

I,

in der

Z O oder S,

A Cyan oder Carbamoyl,

R Wasserstoff, Alkyl oder Phenyl,

$R^1$ Wasserstoff, Brom oder Chlor, Nitro,

$R^2$ Wasserstoff, Chlor, Brom, Nitro, Methyl, Trifluormethyl, Sulfamoyl, N-Mono- oder N,N-disubstituiertes $C_1$- bis $C_4$-Alkylsulfamoyl oder Sulfonsäurephenyl-, -methylphenyl-, -chlorphenyl- oder -methoxyphenylester,

$R^3$ Wasserstoff, gegebenenfalls durch Sauerstoff unterbrochenes und durch Hydroxy, Pyrrolidonyl, Phthalimidyl, $C_1$- bis $C_8$-Alkoxy, Allyloxy, Benzyloxy, Phenyläthoxy, Phenoxy, Methylphenoxy, Chlorphenoxy oder Methoxyphenoxy substituiertes $C_1$- bis $C_8$-Alkyl, Benzyl, Phenyläthyl, Cyclohexyl, gegebenenfalls durch Chlor, Brom, Nitro, Methyl, Äthyl, Methoxy oder Äthoxy substituiertes Phenyl, Naphthyl, Pyridyl, Thienyl oder Furyl, die Substituenten

$B^1$ unabhängig voneinander Wasserstoff oder einen aliphatischen, cycloaliphatischen, araliphatischen, aromatischen, heterocyclischen oder Acylrest und $B^2$ Wasserstoff oder einen aliphatischen Rest bedeuten.

Die erfindungsgemäßen Farbstoffe eignen sich vorzüglich zum Färben von Cellulosefasern und Mischgeweben aus Cellulose und Polyestern.

EP 0 031 505 A1

... GEÄNDERT
siehe Titelseite

Azofarbstoffe

Die Erfindung betrifft Farbstoffe der allgemeinen Formel I

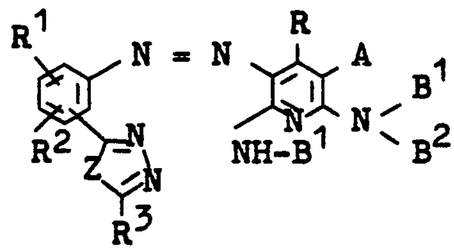
I ,

in der

Z Sauerstoff oder Schwefel,

A Cyan oder Carbamoyl,

R Wasserstoff, Alkyl oder Phenyl,

$R^1$ Wasserstoff, Chlor, Brom oder Nitro,

$R^2$ Wasserstoff, Chlor, Brom, Nitro, Methyl, Trifluormethyl, Sulfamoyl, N-Mono- oder N,N-disubstituiertes $C_1$- bis $C_4$-Alkylsulfamoyl oder Sulfonsäurephenyl-, -methylphenyl-, -chlorphenyl- oder -methoxyphenylester,

$R^3$ Wasserstoff, gegebenenfalls durch Sauerstoff unterbrochenes und durch Hydroxy, Pyrrolidonyl, Phthalimidyl, $C_1$- bis $C_8$-Alkoxy, Allyloxy, Benzyloxy, Phenyläthoxy, Phenoxy, Methylphenoxy, Chlorphenoxy oder Methoxyphenoxy substituiertes $C_1$- bis $C_8$-Alkyl, Benzyl, Phenyläthyl, Cyclohexyl, gegebenenfalls durch Chlor, Brom, Nitro, Methyl, Äthyl, Methoxy oder Äthoxy substituiertes Phenyl, Naphthyl, Pyridyl, Thienyl oder Furyl, die Substituenten

$B^1$ unabhängig voneinander Wasserstoff oder einen aliphatischen, cycloaliphatischen, araliphatischen, aromatischen, heterocyclischen oder Acylrest und

$B^2$ Wasserstoff oder einen aliphatischen Rest bedeuten.

Bg/BL

Alkylreste R sind beispielsweise Methyl, Äthyl, Propyl, Butyl oder Pentyl.

Reste $B^1$ sind unabhängig voneinander z. B. Wasserstoff, $C_1$- bis $C_{18}$-Alkyl, gegebenenfalls durch Äthersauerstoff unterbrochenes und durch Hydroxy, $C_1$- bis $C_8$-Alkoxy, Benzyloxy, ß-Phenyläthoxy, Phenoxy, Tolyloxy, Cyclohexyloxy oder Cyan substituiertes $C_2$- bis $C_8$-Alkyl, $C_5$- bis $C_8$-Cycloalkyl, Hydroxycyclohexyl, ß-Hydroxyäthoxycyclohexyl, $C_7$- bis $C_{12}$-Polycycloalkyl, Hydroxynorbornyl, Hydroxymethyl- oder Hydroxyäthylnorbornyl oder Chlormethylnorbornyl, Phenylalkyl oder Tolylalkyl mit 1 bis 4 C-Atomen im Alkyl, gegebenenfalls durch Chlor, Hydroxy, Methoxy, Äthoxy, Methyl, Äthyl oder Hydroxyäthoxy substituiertes Phenyl, Allyl, Pyrrolidonylalkyl mit 2, 3, 4 oder 6 C-Atomen im Alkyl, Carboxyalkyl mit 2 bis 5 C-Atomen im Alkyl,

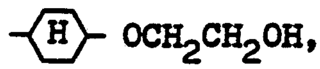, 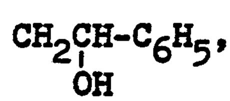, 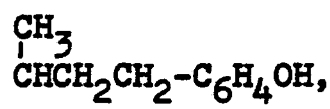,

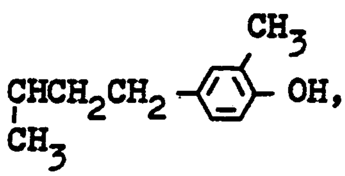, 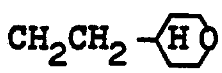 oder 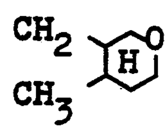 .

Für $B^2$ sind die gleichen aliphatischen Reste wie für $B^1$ zu nennen, das gleiche gilt im Rahmen der allgemeinen Definition für $R^3$.

Einzelne Reste $B^1$, $B^2$ und $R^3$ (soweit unter die allgemeine Definition fallend) sind außer den schon genannten z. B.:

1. gegebenenfalls substituierte Alkylreste:

$CH_3$, $C_2H_5$, n- oder i-$C_3H_7$, n- oder i-$C_4H_9$, $C_6H_{13}$, $CH_2\text{-}\underset{C_2H_5}{CH}\text{-}C_4H_9$, $CH_2CH_2OH$, $(CH_2)_3OH$, $CH_2\underset{CH_3}{C}HOH$, $\underset{CH_3}{CH}\text{-}CH_2OH$, $(CH_2)_4OH$, $(CH_2)_6OH$, $\underset{CH_3}{CH}\text{-}(CH_2)_3\underset{OH}{C}(CH_3)_2$, $(CH_2)_2O(CH_2)_2OH$, $(CH_2)_3O(CH_2)_4OH$, $(CH_2)_3OC_2H_4OH$, $(CH_2)_2CN$, $(CH_2)_5CN$, $(CH_2)_6CN$, $(CH_2)_7CN$, $(CH_2)_2O(CH_2)_2CN$, $(CH_2)_3O(CH_2)_2CN$, $(CH_2)_2O(CH_2)_2O(CH_2)_2CN$, $(CH_2)_3OC_2H_4OCH_3$, $(CH_2)_3OC_2H_4OC_2H_5$, $(CH_2)_3O(CH_2)_6OH$, $(CH_2)_3OC_2H_4OCH(CH_3)_2$, $(CH_2)_3OC_2H_4OC_4H_9$, $(CH_2)_3OC_2H_4OCH_2C_6H_5$, $(CH_2)_3OC_2H_4OC_2H_4C_6H_5$, $(CH_2)_3OC_2H_4O\text{-}\langle H \rangle$, $(CH_2)_3OC_2H_4OC_6H_5$, $(CH_2)_3O\underset{CH_3}{CH}\text{-}CH_2OCH_3$, $(CH_2)_3O\underset{CH_3}{CH}CH_2OC_4H_9$, $(CH_2)_3OCH_2\underset{CH_3}{CH}OCH_3$, $(CH_2)_3O\underset{CH_3}{CH}CH_2OC_2H_5$,

die entsprechenden Reste, bei denen die Gruppierungen $-OC_2H_4-$, $-OCH_2\underset{CH_3}{CH}-$ oder $-O\underset{CH_3}{CH}\text{-}CH_2-$ zwei- oder dreimal vorhanden sind;

$CH_2CH_2OCH_3$, $CH_2CH_2OC_2H_5$, $CH_2CH_2OC_3H_7$, $CH_2CH_2OC_4H_9$, $CH_2CH_2OC_6H_5$, $(CH_2)_3OCH_3$, $(CH_2)_3OC_2H_5$, $(CH_2)_3OC_3H_7$, $(CH_2)_3OC_4H_9$, $(CH_2)_3OCH_2\underset{C_2H_5}{CH}C_4H_9$, $(CH_2)_3OC_6H_{13}$, $(CH_2)_3OC_8H_{17}$, $(CH_2)_3O-$, $(CH_2)_3OCH_2C_6H_5$, $(CH_2)_3OC_2H_4C_6H_5$, $(CH_2)_3OC_6H_5$, $-\underset{CH_3}{CH}CH_2OCH_3$, $\underset{CH_3}{CH}CH_2OC_4H_9$, $\underset{CH_3}{CH}CH_2OC_6H_5$, $\underset{CH_3}{CH}CH_2OCH_2C_6H_5$, $CH_2\underset{CH_3}{CH}OCH_3$, $CH_2\underset{CH_3}{CH}-OC_2H_5$, $CH_2\underset{CH_3}{CH}-OC_4H_9$, $CH_2\underset{CH_3}{CH}-OC_2H_4-C_6H_5$, $CH_2\underset{CH_3}{CH}-OC_6H_5$,

$CH_2$ 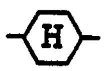 $CH_2OH$;

2. gegebenenfalls substituierte Cyclo- und Polycycloalkylreste:

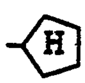, 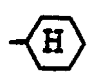, 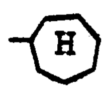, 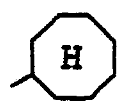, 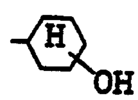, 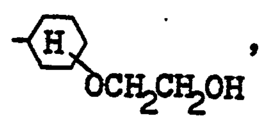,

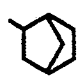, 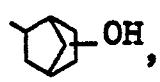, 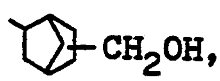, 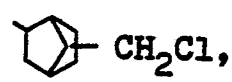,

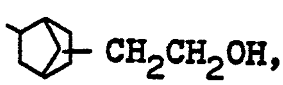, 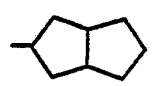, 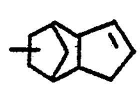, 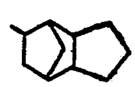, 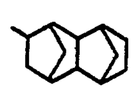,

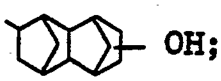;

3. Aralkylreste:

$CH_2C_6H_5$, $C_2H_4C_6H_5$, $CH_2\underset{CH_3}{CH}-C_6H_5$, $CH_2CH_2\underset{CH_3}{CH}C_6H_5$, $CH_2\underset{OH}{CH}-C_6H_5$, $\underset{CH_3}{CH}CH_2CH_2C_6H_5OH$, $\underset{CH_3}{CH}CH_2CH_2$ 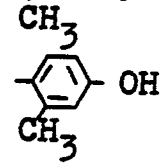

sowie $C_6H_4CH_3$ anstelle von $C_6H_5$;

4. gegebenenfalls substituierte Phenylreste: $C_6H_5$, $C_6H_4CH_3$, $C_6H_4(CH_3)_2$, $C_6H_4OCH_3$, $C_6H_4OC_2H_5$, $C_6H_4OH$, $C_6H_4NH(COCH_3)$, $C_6H_4OCH_2CH_2OH$ oder $C_6H_4Cl$;

5. $CH_2CH{=}CH_2$, $(CH_2)_2COOH$, $(CH_2)_5COOH$ und $(CH_2)_n$-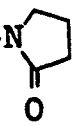,

wobei n = 2, 3, 4 oder 6 ist, $C_2H_4OCOCH_3$, $C_2H_4OCHO$, $C_2H_4OCOCH_3$, $(C_2H_4O)_2COCH_3$, $(C_2H_4O)_2CHO$, $(CH_2)_3OCOCH_3$, $(CH_2)_3OCHO$, $C_2H_4OCOC_2H_4COOH$.

Für $R^3$ sind weiterhin z. B. $CH_2OCH_3$, $CH_2OC_2H_4$, $CH_2OC_3H_7$, $CH_2OC_4H_9$, $CH_2OCH_2CH{=}CH_2$, $CH_2OCH_2C_6H_5$, $CH_2OC_6H_5$, $CH_2CH_2OCH_3$, $CH_2CH_2OC_2H_5$, $CH_2CH_2OC_3H_7$, $CH_2CH_2$-O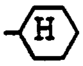 oder $CH_2$-O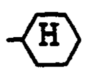 zu nennen.

Bevorzugte Substituenten $B^1$ und $B^2$ sind beispielsweise: Wasserstoff, $CH_3$, $C_2H_5$, n- oder i-$C_3H_7$, n- oder i-$C_4H_9$, $C_6H_{13}$, $CH_2CH(CH_3)OH$, $(CH_2)_4OH$, $(CH_2)_6OH$, $CH(CH_3)(CH_2)_3C(OH)(CH_3)_2$, $(CH_2)_3O(CH_2)_4OH$, $(CH_2)_3O(CH_2)_6OH$, 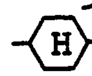 OH, $CH_2CH_2OCH_3$, $CH_2CH_2OC_2H_5$, $CH_2CH_2OC_4H_9$, $(CH_2)_3OCH_3$, $(CH_2)_3OC_2H_5$, $(CH_2)_3OC_3H_7$, $(CH_2)_3OC_4H_9$, $(CH_2)_3$-O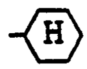, $(CH_2)_3OCH_2$-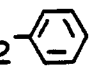, $(CH_2)_3OC_2H_4OCH_3$, $(CH_2)_3OC_2H_4OC_4H_9$, $(CH_2)_3OC_2H_4OC_6H_5$,

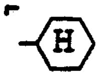, $C_2H_4C_6H_5$, $CH_2\underset{CH_3}{\underset{|}{C}}HC_6H_5$, $C_6H_5$ oder $C_6H_4OC_2H_4OH$.

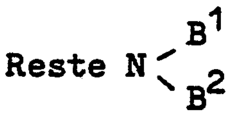 sind beispielsweise Pyrrolidino, Piperidino, Morpholino oder N-Methylpiperazino.

Einige bevorzugte Diazokomponenten sind z. B.:

1) 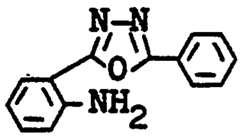

2) 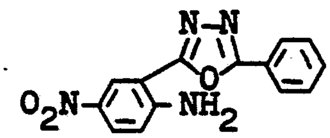

3) 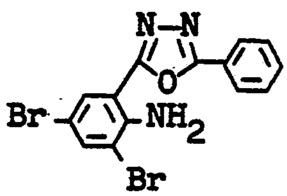

4) 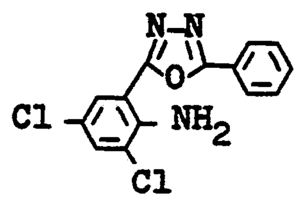

5) 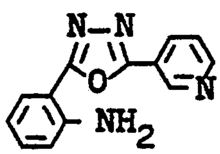

6) 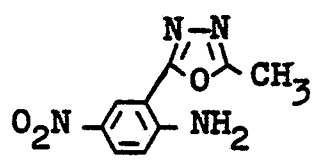

7) 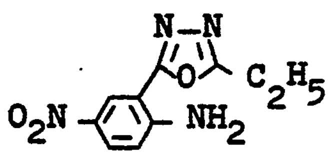

8) 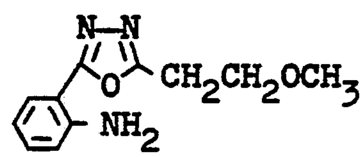

9) 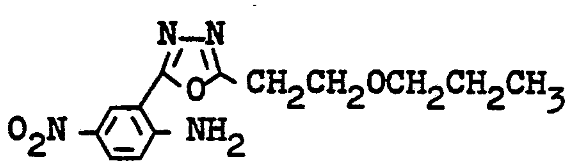

10) 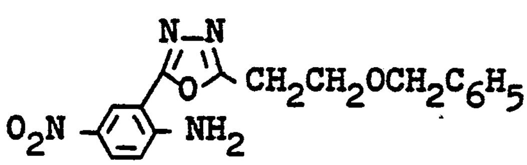

11) 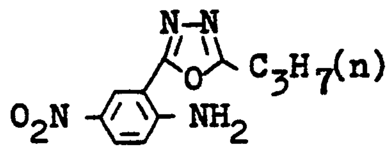

12) 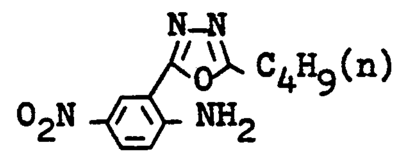

13) 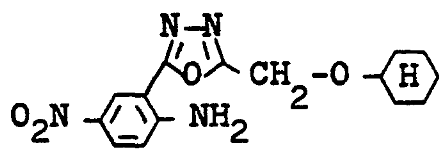

14) 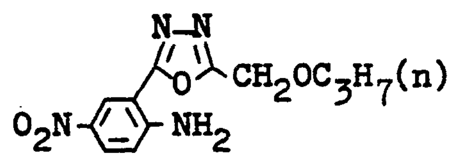

15) 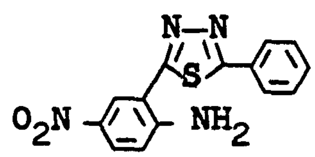 .

Die Farbstoffe der Formel I ergeben auf Cellulosefasern, natürlichen und synthetischen Polyamiden, Polyestern und anderen synthetischen Fasern gelbe bis rote Färbungen mit sehr guten Licht-, Thermofixier- und Naßechtheiten. Hervorzuheben sind die Farbstärken und die klaren Töne, die sich mit vielen Farbstoffen erzielen lassen.

Von besonderer technischer Bedeutung sind Farbstoffe der Formel gemäß Anspruch 1, wobei

Z Sauerstoff,

A Cyan oder Carbamoyl,

R Wasserstoff oder $C_1$- bis $C_3$-Alkyl,

$R^1$ Wasserstoff, Chlor, Brom oder Nitro,

$R^2$ Wasserstoff, Chlor, Brom, Nitro, Methyl, Trifluormethyl, Sulfamoyl, N-mono- oder N,N-disubstituiertes $C_1$- bis $C_4$-Alkylsulfamoyl oder Sulfonsäurephenyl-, -methylphenyl-, -chlorphenyl- oder -methoxyphenylester,

$R^3$ Wasserstoff, $C_1$- bis $C_8$-Alkyl, durch $C_1$- bis $C_8$-Alkoxy, Allyloxy, Phenoxy, Methylphenoxy, Chlorphenoxy

oder Methoxyphenoxy substituiertes $C_1$- bis $C_8$-Alkyl, Benzyl, Phenyläthyl, Cyclohexyl, Phenyl, durch Chlor, Brom, Nitro, Methyl, Äthyl, Methoxy, Äthoxy oder Phenoxy substituiertes Phenyl, Naphthyl, Pyridyl, Thienyl, Furyl oder

$$- X - (O - Y)_n\ OT$$

X $C_1$- bis $C_3$-Alkylen,
Y $C_2$- oder $C_3$-Alkylen,
n 1 oder 2,
T Wasserstoff, $C_1$- bis $C_4$-Alkyl, Benzyl, Phenyläthyl, Phenyl oder Tolyl,
$B^1$ Wasserstoff, $C_1$- bis $C_8$-Alkyl, durch Hydroxy, $C_1$- bis $C_8$-Alkoxy, Phenoxy, Tolyloxy, Phenyl, $C_1$- bis $C_8$-Alkanoyloxy, $C_1$- bis $C_8$-Alkoxycarbonyl, $C_1$- bis $C_4$-Alkylaminocarbonyloxy oder Phenylaminocarbonyloxy substituiertes $C_2$- bis $C_8$-Alkyl, Cyclohexyl, Norbornyl, Allyl, Phenyl, Tolyl, Chlorphenyl oder

$$- Y - (O\text{-}Y)_n - OT \qquad \text{und}$$

$B^2$ Wasserstoff, $C_1$- bis $C_4$-Alkyl oder durch Hydroxy oder $C_1$- bis $C_4$-Alkoxy substituiertes Alkyl
bedeuten.

Vorzugsweise ist R Wasserstoff oder Methyl und $B^2$ Wasserstoff. Ferner ist die Kombination R = H und A = $CONH_2$ bevorzugt.

Für $B^1$ gelten die vorne angegebenen Bevorzugungen.

Besonders bevorzugt sind Farbstoffe, bei denen mindestens ein $B^1$-Rest über ein sekundäres C-Atom an die NH-Gruppe gebunden ist, z.B. Isopropyl oder Cyclohexyl.

Zur Herstellung der Farbstoffe der Formel I kann man eine Diazoniumverbindung von Aminen der Formel

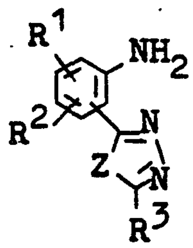

mit einer Kupplungskomponente der Formel

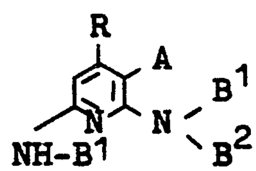

umsetzen. Diazotierung und Kupplung erfolgen dabei nach bekannten Methoden.

In den folgenden Beispielen beziehen sich Angaben über Teile und Prozente, sofern nicht anders vermerkt, auf das Gewicht.

**Beispiel 1**

24 Teile der Verbindung der Formel 1 (siehe Seite 6) werden in 250 Raumteilen Eisessig und 50 Raumteilen Propionsäure gelöst. Bei 0 - 5 °C tropft man 32 g 40 %ige Nitrosylschwefelsäure hinzu und rührt noch 2 Stunden bei 0 bis 5 °C. Dann wird der Überschuß an salpetriger Säure durch Zusatz von Harnstoff wie üblich zerstört.

Das so erhaltene Diazotierungsgemisch gibt man bei 0 bis 5 °C in folgende Mischung:
28 Teile 2-(ω-Hydroxy-butoxyamino)-6-amino-3-cyan-4-methylpyridin werden mit 15 Teilen 10 n-Salzsäure in 500 Teilen Wasser gelöst und 250 Teile Eis hinzugesetzt.

In das Kupplungsgemisch läßt man dann so viel gesättigte Natriumacetatlösung eintropfen, bis im pH-Bereich von 4 - 5 vollständige Kupplung erzielt ist.

Der so erhaltene Farbstoff wird abgesaugt, mit Wasser gewaschen und bei 100 °C getrocknet. Das dabei erhaltene Pulver löst sich mit gelber Farbe in N-Methylpyrrolidon oder Dimethylformamid und gibt auf Geweben aus Polyester oder Polyamid Gelbfärbungen mit sehr guten Lichtechtheiten und hoher Thermofixierechtheit.

$\lambda_{max.}$: 460 nm.

Beispiel 2

In das nach Beispiel 1, Absatz 1, erhaltene Diazotierungsgemisch gibt man bei 0 - 5 °C die Lösung von 27 Teilen 2,6-Bis-(methoxyäthylamino)-3-cyan-4-methylpyridin in 100 Raumteilen Eisessig und anschließend 500 Raumteile einer gesättigten Natriumacetat-Lösung.

Der so erhaltene Farbstoff wird abgesaugt, mit Wasser und dann mit Äthanol gewaschen und bei 100 °C getrocknet. Er liegt dann als gelbes Pulver vor, das sich in N-Methylpyrrolidon mit gelber Farbe löst. Auf Geweben aus Polyester oder Baumwolle oder auf Mischgeweben aus beiden Faserarten erhält man gelbe Drucke mit sehr guten Licht- und Naßechtheiten. $\lambda_{max}$: 457 nm.

Beispiel 3

In die Lösung von 28 Teilen der Verbindung der Formel 2 (Seite 6) in 100 Raumteilen konz. Schwefelsäure gibt man bei 0 - 5 °C 32 Teile 40 %ige Nitrosylschwefelsäure. Nach 2stündigem Rühren bei 0 - 5 °C zerstört man überschüssige salpetrige Säure auf die übliche Weise durch Zusatz von Harnstoff.

Das so erhaltene Gemisch läßt man bei 0 - 5 °C allmählich in die Mischung aus 27 Teilen 2,6-Bis-(methoxyäthylamino)-3-cyan-4-methylpyridin, 3000 Raumteilen N-Methylpyrrolidon und 500 Teilen Eis einfließen.

Nach beendeter Kupplung wird der Farbstoff abgesaugt, mit Äthanol gewaschen und getrocknet. Das dunkelrote Pulver löst sich in N-Methylpyrrolidon mit roter Farbe und ergibt auf Polyester wie auf Baumwolle echte, blaustichig rote Drucke. $\lambda_{max}$: 519 nm

Beispiel 4

14,8 Teile der Diazokomponente der Formel

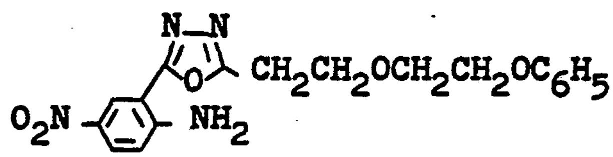

werden in einem Gemisch aus 70 Teilen Eisessig, 10 Teilen Propionsäure und 5 Raumteilen Schwefelsäure verrührt und nach Abkühlen auf 5 °C unter Kühlung mit 14 Teilen 40 %iger Nitrosylschwefelsäure versetzt. Die Diazotierung rührt 70 Minuten bei 0 - 5 °C nach. Anschließend läuft die Diazoniumsalzlösung zu einer auf 0 - 5 °C abgekühlten Lösung aus 8,05 Teilen 2,6-Bis-äthylamino-3-cyan-4-methylpyridin in 600 Raumteilen Wasser und 8 Raumteilen konzentrierter Salzsäure. Nach Anheben des pH-Wertes der Mischung mit verdünnter Natriumacetat- oder Natronlauge-Lösung auf 2,0 - 2,2 ist die Kupplung rasch beendet. Man heizt das Gemisch auf 60 - 70 °C auf, filtriert und wäscht mit 60 - 70 °C warmem Wasser salzfrei. Nach dem Trocknen erhält man 22,5 Teile eines dunkelbraunen Pulvers, das sich in N-Methylpyrrolidon mit blaustichig roter Farbe löst. $\lambda_{max}$: 520 nm.

Der Farbstoff hat die Formel

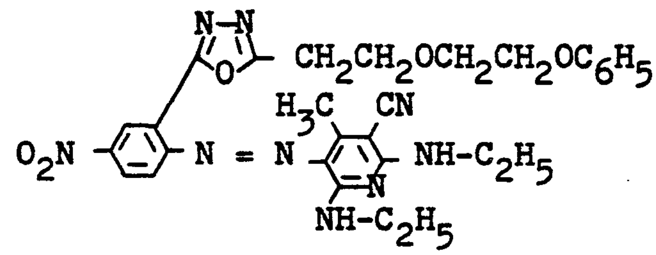

Er gibt auf Polyester sowie auf Baumwolle echte, blaustichig rote Drucke und färbt Polyester nach HT-Verfahren bei 125 - 140 °C in echten, blaustichig roten Tönen.

Beispiel 5

12,7 Teile der Verbindung der Formel

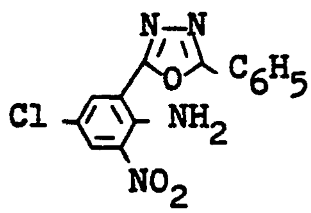

werden bei 0 - 5 °C in ein Gemisch aus 26,4 Teilen Schwefelsäure (96 - 98 %ig), 13,5 Teilen Nitrosylschwefelsäure (42 %ig), 20 Teilen Propionsäure und 120 Teilen Eisessig eingetragen. Man rührt 3,5 Stunden bei 0 - 5 °C nach. Das fertige Diazoniumsalzgemisch läuft in eine auf 0 bis 5 °C abgekühlte Lösung aus 11,6 Teilen 2,6-Bis-methoxypropylamino-3-cyan-4-methylpyridin in 600 Raumteilen Wasser und 10 Raumteilen konzentrierter Salzsäure. Die Kupplung wird durch Anheben des pH-Wertes auf 2,0 - 2,2 mit verdünnter Natronlauge rasch beendet. Man heizt nach

1-stündigem Nachrühren auf 70 °C auf, filtriert ausgefallenen Farbstoff ab, wäscht mit Wasser salzfrei und trocknet. Man erhält 23 Teile eines scharlachroten Pulvers der Formel

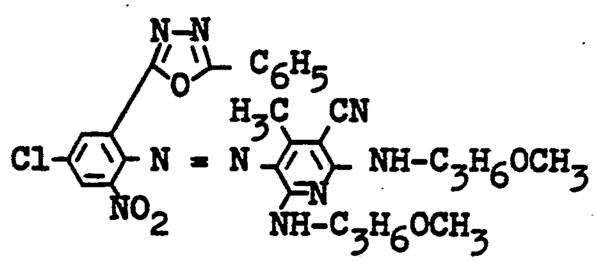 .

Der Farbstoff löst sich in N-Methylpyrrolidon mit rotem Farbton und färbt Polystyrol in lichtechten goldgelben bis orangefarbenen Tönen.

Beispiel 6

14,0 Teile der Diazokomponente der Formel

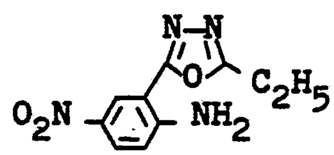

werden bei 50 - 55 °C in 200 Raumteilen Eisessig gelöst. Dazu gibt man 2 Teile eines Emulgiermittels und 150 Teile Eis. Anschließend säuert man bei 0 - 5 °C mit 18 Raumteilen Salzsäure (konz.) an und tropft danach 21 Raumteile einer 23 %igen, wäßrigen Natriumnitritlösung zu. Nach 2-stündigem Rühren ist die Diazotierung beendet, man erhält eine klare Lösung, die mit einer auf 5 °C abgekühlten Lösung von 17,6 Teilen 2,6-Bis-methoxypropylamino-3-cyan-4-methyl-pyridin in 600 Raumteilen Wasser

und 13 Raumteilen konzentrierter Salzsäure vereinigt wird. Nach Anheben des pH-Wertes auf 2 rührt man 30 Minuten nach, anschließend wird auf 70 °C erhitzt, ausgefallener Farbstoff abfiltriert, mit Wasser salzfrei gewaschen und getrocknet. Man erhält 31,5 Teile eines dunkelbraunen Pulvers der Formel

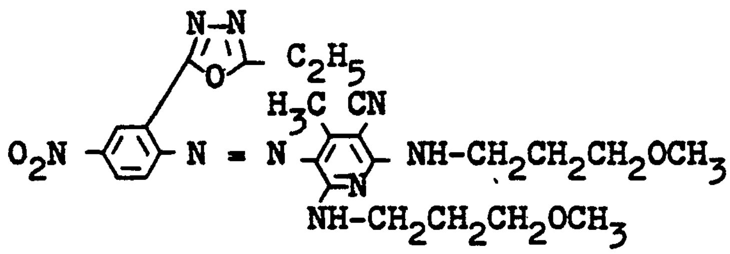

,

das sich in Dimethylformamid mit blaustichig rotem Farbton löst und auf Polyester sowie auf Baumwolle echte, blaustichig rote Drucke ergibt. Der Farbstoff färbt Polyester nach HT- und Thermosolverfahren. $\lambda_{max}$: 520 nm.

Entsprechend den vorstehenden Beispielen können folgende Farbstoffe erhalten werden; die Zahlenwerte in der letzten Spalte geben die $\lambda_{max}$-Werte gemessen in nm in Dimethylformamid an:

| Nr. | Diazokomponente | Kupplungskomponente | Farbton auf PES oder BW | |
|---|---|---|---|---|
| 7 | DK der Formel 2 | 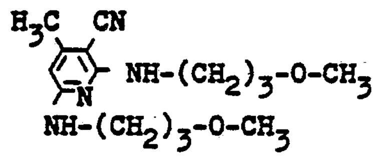 | rot | 521 |
| 8 | DK der Formel 2 | 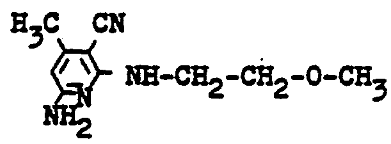 | rot | 503 |
| 9 | DK der Formel 2 | 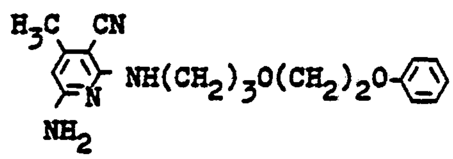 | rot | 504 |
| 10 | DK der Formel 4 | 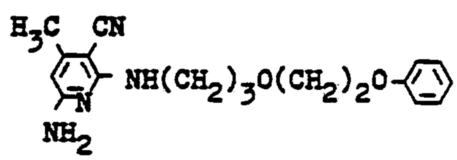 | gelb | 466 |
| 11 | DK der Formel 4 | 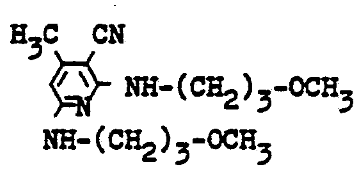 | gelb | 478 |
| 12 | DK der Formel 4 | 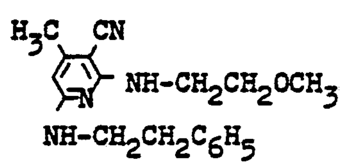 | gelb | 476 |

| Nr. | Diazokomponente | Kupplungskomponente | Farbton auf PES oder BW |
|---|---|---|---|
| 13 | DK der Formel 1 | 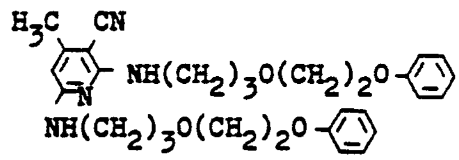 | gelb 446 |
| 14 | DK der Formel 1 | 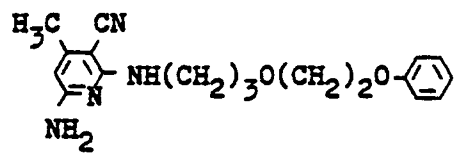 | gelb 441 |
| 15 | DK der Formel 1 | 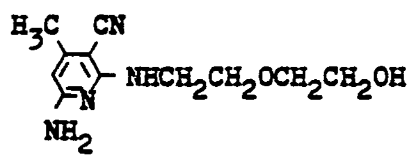 | gelb 440 |
| 16 | DK der Formel 3 | 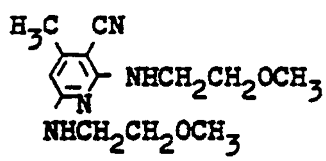 | gelb 476 |
| 17 | DK der Formel 3 | 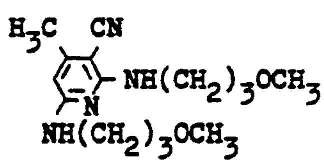 | gelb 478 |

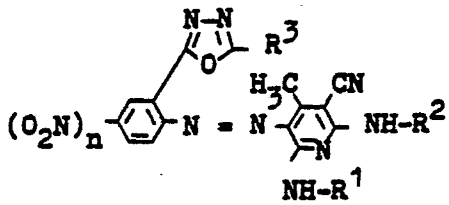

| Nr. | $R^1$ | $R^2$ | $R^3$ | n | Farbton auf Polyester |
|---|---|---|---|---|---|
| 18 | $CH_2CH_2OCOCH_3$ | $CH_2CH_2OCOCH_3$ | $C_6H_5$ | 0 | gelb 450 |
| 19 | " | " | " | 1 | rot 512 |
| 20 | $CH_2CH_2OCOC_2H_5$ | $CH_2CH_2OCOC_2H_5$ | " | 0 | gelb 450 |
| 21 | " | " | " | 1 | rot 511 |
| 22 | $CH_2CH_2OCOOC_2H_5$ | $CH_2CH_2OCOOC_2H_5$ | " | 0 | gelb 450 |
| 23 | " | " | " | 1 | rot 510 |
| 24 | $CH_2CH_2OCONHC_6H_5$ | $CH_2CH_2OCONHC_6H_5$ | " | 0 | gelb 449 |
| 25 | " | " | " | 1 | rot 512 |
| 26 | $CH_2CH_2OCONHC_4H_9$ | $CH_2CH_2OCONHC_4H_9$ | " | 0 | gelb 453 |
| 27 | " | " | " | 1 | rot 512 |

| Nr. | $R^1$ | $R^2$ | $R^3$ | n | Farbton auf Polyester | |
|---|---|---|---|---|---|---|
| 28 | $CH_2CH_2OCH_3$ | $CH_2CH_2OCH_3$ | $C_6H_5$ | 0 | gelb | 458 |
| 29 | H | 〃 | 〃 | 0 | gelb | 444 |
| 30 | 〃 | $(CH_2)_3O(CH_2)_2OC_6H_5$ | 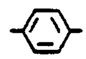 $CH_3$ | 0 | gelb | 445 |
| 31 | 〃 | 〃 | $CH_3$ | 1 | rot | 504 |
| 32 | 〃 | 〃 | $C_2H_5$ | 1 | rot | 504 |
| 33 | 〃 | $(CH_2)_3O(CH_2)_4OH$ | 〃 | 1 | rot | 505 |
| 34 | 〃 | 〃 | $(CH_2)_2OCH_3$ | 1 | rot | 507 |
| 35 | 〃 | $(CH_2)_3O(CH_2)_2OC_6H_5$ | 〃 | 1 | rot | 506 |
| 36 | $CH_2CH_2OCH_3$ | 〃 | 〃 | 1 | rot | 519 |
| 37 | 〃 | 〃 | $C_2H_5$ | 1 | rot | 518 |
| 38 | $CH_2CH_2OH$ | 〃 | 〃 | 1 | rot | 518 |
| 39 | $CH_2CH_2OCH_3$ | 〃 | $C_6H_5$ | 1 | rot | 518 |
| 40 | 〃 | $C_4H_9(n)$ | 〃 | 1 | rot | 521 |
| 41 | 〃 | $(CH_2)_2OCH_3$ | $CH_2CH_2OCH_3$ | 1 | rot | 510 |

| Nr. | $R^1$ | $R^2$ | $R^3$ | n | Farbton auf Polyester |
|---|---|---|---|---|---|
| 42 | $CH_2CH_2OCH_3$ | $(CH_2)_2OCH_3$ | $CH_2CH_2OC_2H_5$ | 1 | rot 517 |
| 43 | $(CH_2)_3OCH_3$ | $(CH_2)_3OCH_3$ | " | 1 | rot 519 |
| 44 | " | " | $CH_2CH_2OCH_3$ | 1 | rot 519 |
| 45 | " | " | $CH_2CH_2C_6H_5$ | 1 | rot 517 |
| 46 | " | " | $CH_3$ | 1 | rot 520 |
| 47 | " | $C_4H_9(n)$ | $C_6H_5$ | 1 | rot 523 |
| 48 | $CH_2CH_2OCH_3$ | $(CH_2)_3O(CH_2)_2OC_6H_5$ | 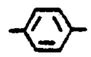 $CH_3$ | 1 | rot 520 |
| 49 | " | $CH_2CH_2OCH_3$ | " | 1 | rot 518 |
| 50 | $(CH_2)_3OCH_3$ | $(CH_2)_3OCH_3$ | " | 1 | rot 521 |
| 51 | $CH_2CH_2OCH_3$ | " | " | 1 | rot 520 |
| 52 | $C_4H_9(n)$ | $C_4H_9(n)$ | " | 1 | rot 525 |
| 53 | $C_2H_5$ | $C_3H_7(n)$ | $(CH_2)_2O(CH_2)_2OC_6H_5$ | 1 | rot 522 |
| 54 | " | $C_2H_5$ | " | 0 | gelb 457 |

| Nr. | $R^1$ | $R^2$ | $R^3$ | n | Farbton auf Polyester |
|---|---|---|---|---|---|
| 55 | $C_3H_7(n)$ | $C_2H_5$ | $(CH_2)_2O(CH_2)_2OC_6H_5$ | 0 | gelb 457 |
| 56 | " | " | " | 1 | rot 518 |
| 57 | $CH_2CH_2OCH_3$ | $(CH_2)_3OCH_3$ | $C_2H_5$ | 1 | rot 514 |
| 58 | " | " | $CH_2CH_2CH_3$ | 1 | rot 520 |
| 59 | " | $CH_2CH_2OCH_3$ | " | 1 | rot 520 |
| 60 | $(CH_2)_3OCH_3$ | $(CH_2)_3OCH_3$ | " | 1 | rot 521 |
| 61 | $CH<^{CH_3}_{CH_2CH_2OCH_3}$ | " | " | 1 | rot 522 |
| 62 | " | $CH<^{CH_3}_{CH_2CH_2OCH_3}$ | " | 1 | rot 525 |
| 63 | " | " | $C_2H_5$ | 1 | rot 524 |
| 64 | $(CH_2)_3OCH_3$ | $(CH_2)_3OCH_3$ | $C_4H_9(n)$ | 1 | rot 525 |
| 65 | " | " | 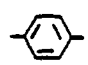 $OCH_3$ | 1 | rot 517 |
| 66 | " | " | 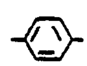 Cl | 0 | gelb 459 |

| Nr. | $R^1$ | $R^2$ | $R^3$ | n | Farbton auf Polyester | |
|---|---|---|---|---|---|---|
| 67 | $(CH_2)_3OCH_3$ | $(CH_2)_3OCH_3$ | 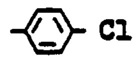 | 1 | rot | 516 |
| 68 | $C_4H_9(n)$ | $C_4H_9(n)$ | " | 1 | rot | 525 |
| 69 | H | $CH_2-CH(C_2H_5)-C_4H_9(n)$ | $CH_2CH_2OCH_3$ | 0 | gelb | 460 |
| 70 | $CH_2CH_2OCOCH_3$ | $CH_2CH_2OCOCH_3$ | $(CH_2)_2O(CH_2)_2OC_6H_5$ | 1 | rot | 512 |
| 71 | " | " | " | 0 | gelb | 466 |
| 72 | $(CH_2)_3OCH_3$ | $(CH_2)_3OCH_3$ | 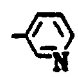 | 0 | gelb | 472 |
| 73 | " | " | " | 1 | rot | 524 |

Tabelle 2

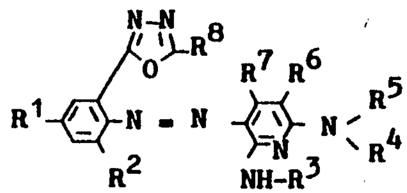

| Nr. | $R^1$ | $R^2$ | $R^3$ | $R^4$ | $R^5$ | $R^6$ | $R^7$ | $R^8$ | Farbton auf Baumwolle | |
|---|---|---|---|---|---|---|---|---|---|---|
| 74 | Br | Br | $(CH_2)_2OCH_3$ | $(CH_2)_2OCH_3$ | $(CH_2)_2OCH_3$ | CN | $CH_3$ | $C_6H_5$ | gelb | 479 |
| 75 | " | " | " | " | H | " | H | " | gelb | 468 |
| 76 | H | H | " | " | $(CH_2)_2OCH_3$ | " | " | $(CH_2)_2O(CH_2)_6OC_6H_5$ | gelb | 470 |
| 77 | " | " | $(CH_2)_3OCH_3$ | H | $(CH_2)_3OCH_3$ | " | $CH_3$ | $CH_2OCH_2CH_2OCH_3$ | gelb | 472 |
| 78 | $O_2N$ | " | " | $(CH_2)_2OCH_3$ | $(CH_2)_2OCH_3$ | " | " | $C_2H_5$ | rot | 513 |
| 79 | " | Cl | " | H | $(CH_2)_3OCH_3$ | " | " | $C_6H_5$ | bordo | 530 |

| Nr. | $R^1$ | $R^2$ | $R^3$ | $R^4$ | $R^5$ | $R^6$ | $R^7$ | $R^8$ | Farbton auf Baumwolle |
|---|---|---|---|---|---|---|---|---|---|
| 80 | $O_2N$ | Br | $(CH_2)_3OCH_3$ | H | $(CH_2)_3OCH_3$ | CN | $CH_3$ | $C_6H_5$ | bordo 531 |
| 81 | " | H | " | " | " | $CONH_2$ | H | $C_3H_7(n)$ | bordo 545 |
| 82 | $NO_2$ | $NO_2$ | " | $(CH_2)_3OCH_3$ | H | CN | $CH_3$ | " | violett 550 |
| 83 | $O_2N$ | H | $C_2H_5$ | H | $C_2H_5$ | $CONH_2$ | H | $CH_2OC_3H_7(n)$ | bordo 544 |
| 84 | " | " | " | " | " | CN | $CH_3$ | $(CH_2)_2OCH_2C_6H_5$ | rot 522 |
| 85 | " | " | " | " | " | " | " | $(CH_2)_2OCH_2CH_2C_6H_5$ | rot 522 |
| 86 | " | " | " | " | " | " | " | $(CH_2)_2OC_6H_5$ | rot 523 |
| 87 | " | " | $(CH_2)_3OC_2H_5$ | " | $(CH_2)_3OC_2H_5$ | " | " | $CH_2OCH_3$ | rot 527 |

| Nr. | $R^1$ | $R^2$ | $R^3$ | $R^4$ | $R^5$ | $R^6$ | $R^7$ | $R^8$ | Farbton auf Baumwolle | |
|---|---|---|---|---|---|---|---|---|---|---|
| 88 | $O_2N$ | H | $(CH_2)_2OCH_3$ | H | $(CH_2)_2OCH_3$ | CN | $CH_3$ | $CH_2OCH_3$ | rot | 527 |
| 89 | " | " | $(CH_2)_3OCH_3$ | " | $(CH_2)_3OCH_3$ | " | " | $CH_2OC_3H_7(n)$ | rot | 526 |
| 90 | H | " | $(CH_2)_2$- 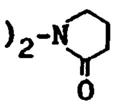 | " | 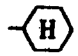 | " | " | $C_6H_5$ | gelb | 465 |
| 91 | $CF_3$ | " | $(CH_2)_2-OCH_3$ | " | $(CH_2)_2-OCH_3$ | " | " | " | goldgelb | 471 |
| 92 | " | " | $(CH_2)_3-OCH_3$ | " | $(CH_2)_3-OCH_3$ | " | " | " | gelborange | 472 |
| 93 | " | " | H | " | $(CH_2)_3-O-(CH_2)_4-OH$ | " | " | " | goldgelb | 463 |

Tabelle 3

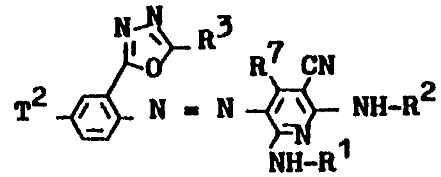

| Nr. | $T^2$ | $R^3$ | $R^7$ | $R^1$ | $R^2$ | Farbton | |
|---|---|---|---|---|---|---|---|
| 94 | $CF_3$ | $C_6H_5$ | H | $CH_2CH_2OCH_3$ | $CH_2CH_2OCH_3$ | goldgelb | 471 |
| 95 | $(C_2H_5)_2NO_2S$- | " | $CH_3$ | " | " | orange | 477 |
| 96 | " | " | " | $(CH_2)_3OCH_3$ | $(CH_2)_3OCH_3$ | orange | 479 |
| 97 | " | " | " | $C_4H_9(n)$ | $C_4H_9(n)$ | orange | 480 |
| 98 | $C_6H_5O_3S$- | $CH_3$ | " | " | " | orange | 478 |
| 99 | " | $C_2H_5$ | " | $(CH_2)_3OCH_3$ | $(CH_2)_3OCH_3$ | orange | 476 |

| Nr. | $T^2$ | $R^3$ | $R^7$ | $R^1$ | $R^2$ | Farbton |
|---|---|---|---|---|---|---|
| 100 | $O_2N-$ | $CH_2OCH_3$ | $CH_3$ | $(CH_2)_3OCH_3$ | $(CH_2)_3OCH_3$ | blaustichig rot 528 |
| 101 | " | " | H | " | " | blaustichig rot 528 |
| 102 | " | " | $C_2H_5$ | " | " | blaustichig rot 527 |
| 103 | " | " | $CH_3$ | $C_4H_9(n)$ | $C_4H_9(n)$ | blaustichig rot 529 |
| 104 | " | " | " | $C_3H_7(n)$ | $C_3H_7(n)$ | blaustichig rot 528 |
| 105 | " | " | " | $C_2H_5$ | $C_2H_5$ | blaustichig rot 526 |
| 106 | " | $CH_2OC_6H_5$ | " | " | " | blaustichig rot 524 |
| 107 | " | " | " | $C_4H_9(n)$ | $C_4H_9(n)$ | blaustichig rot 528 |
| 108 | " | $CH_2CH_2OC_3H_7(n)$ | " | " | " | rot 525 |
| 109 | " | " | " | $C_3H_7(n)$ | $C_3H_7(n)$ | rot 524 |

| Nr. | $T^2$ | $R^3$ | $R^7$ | $R^1$ | $R^2$ | Farbton | |
|---|---|---|---|---|---|---|---|
| 110 | $O_2N-$ | $CH_2CH_2OC_3H_7(n)$ | $CH_3$ | $C_2H_5$ | $C_2H_5$ | rot | 522 |
| 111 | " | " | " | $(CH_2)_3OCH_3$ | $(CH_2)_3OCH_3$ | blaustichig rot | 526 |
| 112 | " | $CH_2CH_2OC_2H_5$ | " | $C_2H_5$ | $C_2H_5$ | rot | 522 |
| 113 | " | " | " | $C_3H_7(n)$ | $C_3H_7(n)$ | rot | 523 |
| 114 | " | " | " | " | $(CH_2)_3OCH_3$ | rot | 522 |
| 115 | " | " | " | $CH_2CH=CH_2$ | $CH_2CH=CH_2$ | rot | 519 |
| 116 | " | " | " | $C_4H_9(n)$ | $C_4H_9(n)$ | rot | 526 |
| 117 | " | " | " | $(CH_2)_2OCH_3$ | $(CH_2)_3OCH_3$ | rot | 522 |
| 118 | " | " | " | $C_2H_5$ | $C_6H_{13}(n)$ | rot | 523 |
| 119 | " | " | " | " | $C_6H_{13}(i)$ | rot | 523 |

| Nr. | $T^2$ | $R^3$ | $R^7$ | $R^1$ | $R^2$ | Farbton | |
|---|---|---|---|---|---|---|---|
| 120 | $O_2N-$ | $CH_2OCH_3$ | $CH_3$ | $C_2H_5$ | $C_6H_{13}(i)$ | rot | 526 |
| 121 | " | $CH_2OC_2H_5$ | " | $C_3H_7(n)$ | $C_3H_7(n)$ | rot | 526 |
| 122 | " | " | " | $C_4H_9(n)$ | $C_4H_9(n)$ | rot | 528 |
| 123 | " | " | " | $(CH_2)_3OCH_3$ | $(CH_2)_3OCH_3$ | rot | 525 |
| 124 | " | $CH_2-CH(CH_3)-OCH_3$ | " | " | " | rot | 520 |
| 125 | " | $CH_2CH_2OC_4H_9(n)$ | " | " | " | rot | 520 |
| 126 | " | " | " | $C_2H_5$ | $C_2H_5$ | rot | 518 |
| 127 | " | " | " | $C_3H_7(n)$ | $C_3H_7(n)$ | rot | 522 |
| 128 | " | $CH_2CH_2OC_6H_{13}(n)$ | " | $C_2H_5$ | $C_2H_5$ | rot | 517 |
| 129 | " | $CH_2CH_2-O-$ 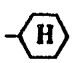 | " | " | " | rot | 517 |

| Nr. | $T^2$ | $R^3$ | $R^7$ | $R^1$ | $R^2$ | Farbton |
|---|---|---|---|---|---|---|
| 130 | $O_2N-$ | $CH_2CH_2-O-$ 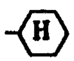 | $CH_3$ | $C_3H_7(n)$ | $C_3H_7(n)$ | rot 521 |
| 131 | " | " | " | $(CH_2)_3OCH_3$ | $(CH_2)_3OCH_3$ | rot 519 |
| 132 | " | H | " | $C_4H_9(n)$ | $C_4H_9(n)$ | rot 526 |
| 133 | " | " | " | $(CH_2)_3OCH_3$ | $(CH_2)_3OCH_3$ | rot 525 |
| 134 | " | $CH_2CH_2OCH_2CH_2OC_4H_9(n)$ | " | $C_2H_5$ | $C_2H_5$ | rot 520 |
| 135 | " | " | " | $C_3H_7(n)$ | $C_3H_7(n)$ | rot 520 |
| 136 | " | " | " | $C_4H_9(n)$ | $C_4H_9(n)$ | rot 525 |
| 137 | " | " | " | $(CH_2)_3OCH_3$ | $(CH_2)_3OCH_3$ | rot 522 |
| 138 | " | $CH_2CH_2(OCH_2CH_2)_2OC_4H_9(n)$ | " | $C_2H_5$ | $C_2H_5$ | rot 519 |
| 139 | " | " | " | $C_3H_7(n)$ | $C_3H_7(n)$ | rot 524 |

| Nr. | $T^2$ | $R^3$ | $R^7$ | $R^1$ | $R^2$ | Farbton |
|---|---|---|---|---|---|---|
| 140 | $O_2N$- | $CH_2CH_2(OCH_2CH_2)_2OC_4H_9(n)$ | $CH_3$ | $C_4H_9(n)$ | $C_4H_9(n)$ | rot 526 |
| 141 | " | $C_6H_5$ | " | H | $(CH_2)_3O(CH_2)_2OC_6H_5$ | rot 503 |
| 142 | Cl | " | " | " | $(CH_2)_3O(CH_2)_4OH$ | goldgelb 461 |
| 143 | Br | " | " | $(CH_2)_3OCH_3$ | $(CH_2)_3OCH_3$ | orange 475 |

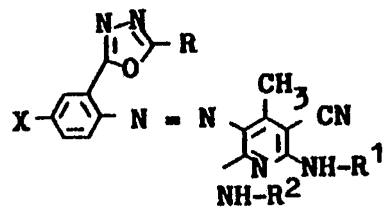

| Nr. | X | R | $R^1$ | $R^2$ | Farbton |
|---|---|---|---|---|---|
| 144 | $-SO_2N(C_2H_5)_2$ | $C_6H_5$ | $C_2H_4C_6H_5$ | $C_2H_4C_6H_5$ | orange |
| 145 | " | " | $C_2H_4OCH_3$ | " | orange |
| 146 | " | " | $(CH_2)_3OC_2H_4OC_6H_5$ | H | orange |
| 147 | Cl | " | " | " | orange |
| 148 | $-SO_2NH$ 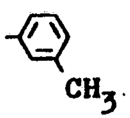 | " | $C_2H_4OCH_3$ | $C_2H_4OCH_3$ | orange |
| 149 | " | " | $C_3H_6OCH_3$ | $C_3H_6OCH_3$ | orange |
| 150 | H | 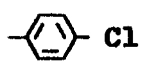 | " | " | gelb |

| Nr. | X | R | $R^1$ | $R^2$ | Farbton |
|---|---|---|---|---|---|
| 151 | H | $CH_2OCH_2CH(C_4H_9(n))C_2H_5$ | $C_3H_6OCH_3$ | $C_3H_6OCH_3$ | gelb |
| 152 | $NO_2$ | $CH_2OCH_3$ | $CH(C_2H_5)CH_3$ | $C_4H_9(n)$ | rot 526 |
| 153 | " | $CH_3$ | $C_2H_4C_6H_5$ | $C_2H_4C_6H_5$ | rot 522 |
| 154 | " | $C_2H_5$ | " | " | rot 522 |
| 155 | " | $CH_2OCH_3$ | " | " | rot 523 |
| 156 | " | $C_2H_4OCH_3$ | " | " | rot 523 |
| 157 | " | $C_2H_4OC_3H_7(n)$ | " | " | rot 523 |
| 158 | " | " | $C_2H_4OCONHC_4H_9(n)$ | $C_2H_5$ | rot 515 |

| Nr. | X | R | $R^1$ | $R^2$ | Farbton |
|---|---|---|---|---|---|
| 159 | $NO_2$ | $C_2H_4OCH_3$ | $C_2H_4OCONHC_4H_9(n)$ | $C_2H_5$ | rot 513 |
| 160 | " | $C_2H_4OC_3H_7(n)$ | $C_2H_4OCONHC_6H_5$ | " | rot 515 |
| 161 | " | $C_3H_7$ | $CH_2CH_2CH_2OCH_3$ | 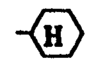 | rot 511 |

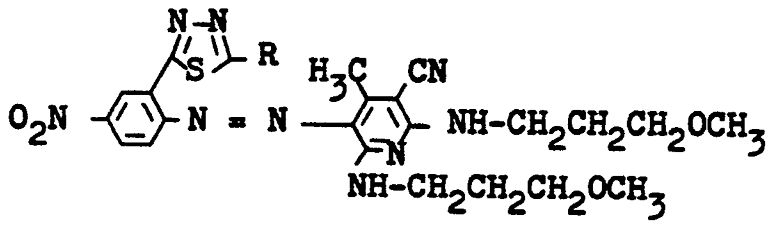

| Nr. | R | Farbton |
|---|---|---|
| 162 | $CH_3$ | blaustichig rot |
| 163 | $CH_2OC_2H_5$ | blaustichig rot |
| 164 | $CH_2CH_2OCH_3$ | blaustichig rot |
| 165 | $CH_2CH_2OC_2H_5$ | blaustichig rot |
| 166 | $C_2H_5$ | blaustichig rot |
| 167 | $C_3H_7(n)$ | blaustichig rot |
| 168 | $C_6H_5$ | blaustichig rot 515nm |

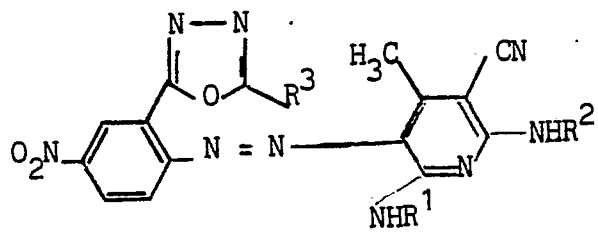

| | | $R^1$ | $R^2$ | $R^3$ | Farbton | |
|---|---|---|---|---|---|---|
| Beispiel | 169 | $CH(CH_3)_2$ | $C_6H_5$ | $C_2H_5$ | blaustichtig rot | 513 |
| | 170 | " | " | $CH(CH_3)_2$ | " | 515 |
| | 171 | $(CH_2)_3OCH_3$ | 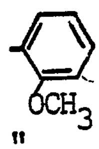 | $C_2H_5$ | bordo | 532 |
| | 172 | $CH(CH_3)_2$ | " | " | " | 533 |
| | 173 | " | $C_6H_5$ | $C_3H_7(n)$ | blaustichtig rot | 516 |
| | 174 | " | 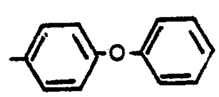 | $CH_3$ | " | 519 |
| | 175 | " | $C_6H_5$ | " | " | 518 |
| | 176 | " | 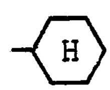 | $C_2H_5$ | rot | 511 |
| | 177 | 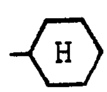 | 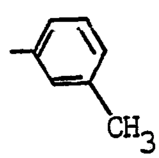 | $CH_3$ | blaustichig rot | 519 |
| | 178 | $CH(CH_3)_2$ | 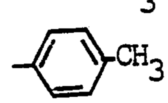 | " | " | 519 |
| | 179 | " | " | $C_2H_5$ | " | 519 |

Patentansprüche

1. Azofarbstoffe der allgemeinen Formel

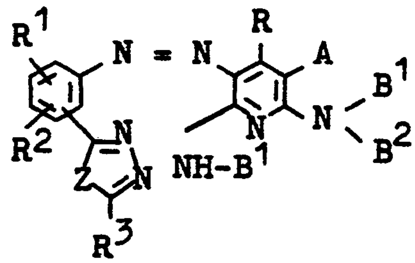

I ,

in der

Z O oder S,

A Cyan oder Carbamoyl,

R Wasserstoff, Alkyl oder Phenyl,

$R^1$ Wasserstoff, Brom oder Chlor, Nitro,

$R^2$ Wasserstoff, Chlor, Brom, Nitro, Methyl, Trifluormethyl, Sulfamoyl, N-Mono- oder N,N-disubstituiertes $C_1$- bis $C_4$-Alkylsulfamoyl oder Sulfonsäurephenyl-, -methylphenyl-, -chlorphenyl- oder -methoxyphenylester,

$R^3$ Wasserstoff, gegebenenfalls durch Sauerstoff unterbrochenes und durch Hydroxy, Pyrrolidonyl, Phthalimidyl, $C_1$- bis $C_8$-Alkoxy, Allyloxy, Benzyloxy, Phenyläthoxy, Phenoxy, Methylphenoxy, Chlorphenoxy oder Methoxyphenoxy substituiertes $C_1$- bis $C_8$-Alkyl, Benzyl, Phenyläthyl, Cyclohexyl, gegebenenfalls durch Chlor, Brom, Nitro, Methyl, Äthyl, Methoxy oder Äthoxy substituiertes Phenyl, Naphthyl, Pyridyl, Thienyl oder Furyl, die Substituenten

$B^1$ unabhängig voneinander Wasserstoff oder einen aliphatischen, cycloaliphatischen, araliphatischen, aromatischen, heterocyclischen oder Acylrest und

$B^2$ Wasserstoff oder einen aliphatischen Rest bedeuten.

2. Verbindungen gemäß Anspruch 1, wobei
Z Sauerstoff,
A Cyan oder Carbamoyl,
R Wasserstoff oder $C_1$- bis $C_3$-Alkyl,
$R^1$ Wasserstoff, Chlor, Brom oder Nitro,
$R^2$ Wasserstoff, Chlor, Brom, Nitro, Methyl, Trifluormethyl, Sulfamoyl, N-mono- oder N,N-disubstituiertes $C_1$- bis $C_4$-Alkylsulfamoyl oder Sulfonsäurephenyl-, -methylphenyl-, -chlorphenyl- oder -methoxyphenylester,
$R^3$ Wasserstoff, $C_1$- bis $C_8$-Alkyl, durch $C_1$- bis $C_8$-Alkoxy, Allyloxy, Phenoxy, Methylphenoxy, Chlorphenoxy oder Methoxyphenoxy substituiertes $C_1$- bis $C_8$-Alkyl, Benzyl, Phenyläthyl, Cyclohexyl, Phenyl, durch Chlor, Brom, Nitro, Methyl, Äthyl, Methoxy, Äthoxy oder Phenoxy substituiertes Phenyl, Naphthyl, Pyridyl, Thienyl, Furyl oder

$$- X - (O - Y)_n OT$$

X $C_1$- bis $C_3$-Alkylen,
Y $C_2$- oder $C_3$-Alkylen,
n 1 oder 2,
T $C_1$- bis $C_4$-Alkyl, Benzyl, Phenyläthyl, Phenyl oder Tolyl,
$B^1$ Wasserstoff, $C_1$- bis $C_8$-Alkyl, durch Hydroxy, $C_1$- bis $C_8$-Alkoxy, Phenoxy, Tolyloxy, Phenyl, $C_1$- bis $C_8$-Alkanoyloxy, $C_1$- bis $C_8$-Alkoxycarbonyl, $C_1$- bis $C_4$-Alkylaminocarbonyloxy oder Phenylaminocarbonyloxy

substituiertes $C_2$- bis $C_8$-Alkyl, Cyclohexyl, Norbornyl, Allyl, Phenyl, Tolyl, Chlorphenyl oder

$$- Y - (O - Y)_n - OT \qquad \text{und}$$

$B^2$ Wasserstoff, $C_1$- bis $C_4$-Alkyl oder durch Hydroxy oder $C_1$- bis $C_4$-Alkoxy substituiertes Alkyl

bedeuten.

3. Verbindungen gemäß Anspruch 1, wobei
A Cyan ist.

4. Verbindungen gemäß Anspruch 1, wobei
R Wasserstoff oder Methyl ist.

5. Verbindungen gemäß Anspruch 1, wobei
$R^1$ Wasserstoff, Chlor oder Nitro und
$R^2$ Wasserstoff oder Chlor sind.

6. Verbindungen gemäß Anspruch 1, wobei
$R^3$ $C_1$- bis $C_4$-Alkyl, durch $C_1$- bis $C_8$-Alkoxy substituiertes $C_1$- bis $C_3$-Alkyl, Phenyl oder durch Chlor oder Methyl substituiertes Phenyl ist.

7. Verbindungen gemäß Anspruch 1, wobei
$B^1$ Wasserstoff, $C_2$- bis $C_6$-Alkyl, Allyl, durch $C_1$- bis $C_4$-Alkoxy substituiertes $C_2$- oder $C_3$-Alkyl, Phenyläthyl, Cyclohexyl oder

$$Y - O - Y - OT^1,$$

$T^1$ $C_1$- bis $C_4$-Alkyl, Benzyl, Phenyläthyl, Phenyl oder

Tolyl sind und
Y die für Anspruch 2 angegebene Bedeutung hat.

8. Verbindungen gemäß Anspruch 1 der Formel

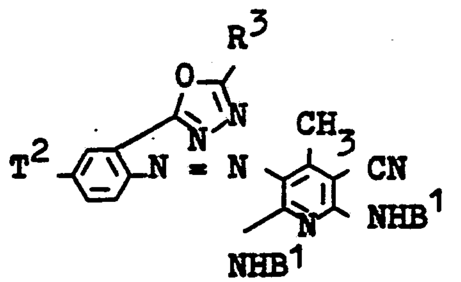

,

in der
$T^2$ Wasserstoff, Chlor oder Nitro ist und
$B^1$ und $R^3$ die angegebenen Bedeutungen haben.

9. Verfahren zur Herstellung von Farbstoffen gemäß Anspruch 1, dadurch gekennzeichnet, daß man eine Diazoniumverbindung von Aminen der Formel

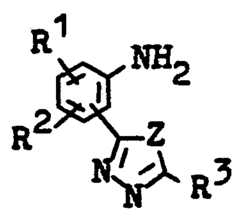

mit einer Kupplungskomponente der Formel

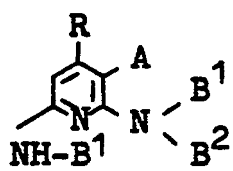

umsetzt.

10. Farbstoffzubereitungen zum Färben von natürlichen und synthetischen Fasern, enthaltend neben üblichen Bestandteilen einen Farbstoff gemäß Anspruch 1.

11. Verwendung der Farbstoffe gemäß Anspruch 1 zum Färben von insbesondere thermoplastischen Kunststoffen in der Masse.

Europäisches Patentamt

**EUROPÄISCHER RECHERCHENBERICHT**

0031505

Nummer der Anmeldung

EP 80 10 7663

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 2 267 345 (BASF)<br>* Seite 1, ganz; Seite 2, Zeilen 1-10, 19-28; Seite 3, Zeilen 20-23, 33,34,37 und 38; Seite 4, Zeilen 1-10; Seite 5, Absatz 1 *<br>& DE - A - 2 417 217<br>& DE - A - 2 457 687<br>--- | 1,9-11 |
| | GB - A - 2 002 409 (BASF)<br>* Seite 1, Zeilen 1-35 *<br>& DE - A - 2 734 927<br>--------- | 1,9-11 |

KLASSIFIKATION DER ANMELDUNG (Int. Cl.)

C 09 B 29/42//
C 08 K 5/23
C 09 B 67/38
D 06 P 1/02

RECHERCHIERTE SACHGEBIETE (Int. Cl.)

C 09 B 29/36
29/42
29/01
29/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 26.03.1981 | GREEN |